# EUROPÄISCHE PATENTSCHRIFT

(11) **EP 0 633 458 B1**
(45) Veröffentlichungstag und Bekanntmachung des Hinweises auf die Patenterteilung: **16.12.1998**
(21) Anmeldenummer: 94810369.2
(22) Anmeldetag: 23.06.1994
(51) Int. Cl.: G01L 7/08, G01D 11/24

(54) **Messgerät und Verfahren zur Montage desselben**
Measuring instrument and method of assembly thereof
Instrument de mesure et son procédé d'assemblage

(30) Priorität: 09.07.1993 CH 2074/93
(43) Veröffentlichungstag der Anmeldung: 11.01.1995
(73) Patentinhaber: SYNTON AG, 3250 Lyss (CH)
(72) Erfinder: Rutten, Gerard, CH-3280 Murten (CH); Hofmann, Walter, CH-2572 Sutz (CH)
(74) Vertreter: AMMANN PATENTANWAELTE AG BERN

(56) Entgegenhaltungen:
- DE-U- 8 813 899
- FR-A- 2 233 679
- FR-A- 2 343 998
- US-A- 1 556 877

## Beschreibung

Die vorliegende Erfindung betrifft ein Messgerät gemäss Oberbegriff des Anspruchs 1. Ein derartiges Messgerät ist aus DE-U-8813 899 bekannt. Mechanische Messgeräte dieser Art werden für verschiedene Zwecke eingesetzt, beispielsweise als Druckmessgerät mit einer Druckmessdose, Längenmessgerät, Hygrometer, Dynamometer sowie Kapillarrohr-Thermometer. Beim erwähnten bekannten Gerät besteht das Gestell aus einem U-förmigen Unterteil und einem einzigen, aufgenappten, im wesentlichen ebenen Deckteil. Es ergeben sich dabei keine besonderen Probleme für die Verbindung der beiden Teile mittels elastischer Halterungen, aber die Möglichkeiten des Einbaus eines komplizierteren Mechanismus in das aus einem einfachen Rahmen bestehende Gestell sind beschränkt.

Ziel vorliegender Erfindung ist es, auch dann die Herstellung eines Messgerätes der oben erwähnten Art entscheidend zu rationalisieren, wenn mehrere Gestellteile zu verbinden sind. Dieses Ziel wird erreicht durch die Massnahmen gemäss dem Anspruch 1. Durch die Ausbildung des Gestells mit Brücken sind die Ausbaumöglichkeiten erheblich verbessert und trotzdem ist eine rationelle Herstellung gewährleistet. Im übrigen können diese miteinander verbundenen Gestellsteile verschiedene Funktionen übernehmen, wofür bisher besondere Teile vorzusehen waren.

Die Herstellung von Gestellteilen des Messwerks als Formteile, insbesondere Stanz-Biege-Teile, und deren gegenseitige Verbindung unter sich und mit einer Basis oder einem Gehäuse des Messgerätes durch ineinandergreifende Orientierungsmittel und elastischen Druck, führt zu einer verhältnismässig geringen Positionsgenauigkeit der gegenseitigen Lage der verschiedenen Teile des Gestells; Es ist daher erwünscht, besonders einfache und vielseitige Möglichkeiten einer Nachstellung und eines Abgleichs vorzusehen. Anspruch 9 nennt konstruktive Massnahmen zu diesem Zweck. Wie erwähnt, stehen diese Massnahmen in einem Zusammenhang mit den oben erläuterten, eine rationelle Herstellung erlaubenden Merkmalen.

Die Erfindung und ihre besonderen Vorteile werden nun anhand eines in der Zeichnung dargestellten Ausführungsbeispiels näher erläutert.
- Fig. 1: zeigt einen Querschnitt durch das als Druckmesser ausgebildete Messgerät,
- Fig. 2: zeigt eine Draufsicht,
- Fig. 3: zeigt einen Schnitt nach Linie III-III in Figur 1, teilweise in Stirnansicht
- Fig. 4: zeigt eine Teil-Stirnansicht der Gerätebasis und
- Fig. 5: zeigt ein Federlager.

Das dargestellte Druckmessgerät weist einen Unterteil oder eine Basis in Form eines Stanz-Biege-Teils 1 auf, welcher den Boden einer Druckmessdose mit einer Membran 2 bildet. Mit der Basis 1 ist ein Anschlussstutzen 3 dicht verbunden. Die Basis 1 ist mit drei Nocken 4 versehen, an welche der Rand der Membran 2 anliegt und womit dieselbe auf der Basis 1 zentriert wird. Ihr Rand ist mit der Basis dicht verlötet, verschweisst oder verklebt. Im Bereiche der Druckmessdose ist die Basis 1 derart verformt, dass ihr äusserer Rand näher an der Membran 2 liegt als ihr Zentrum. Damit wird eine erwünschte Versteifung der Basis erzielt, so dass dieselbe aus relativ dünnem Material hergestellt werden kann. Ausserdem ergibt sich damit eine Sicherung der Membran gegen übermässige Verformung im Falle eines Vakuums, die zu einer Beschädigung führen könnte, indem der Rand der Membran nach relativ geringer Verformung von der Basis abgestützt wird, und sich nur der Mittelteil der Membran stärker verformen kann. Ferner weist die Druckmessdose ein geringes Volumen auf.

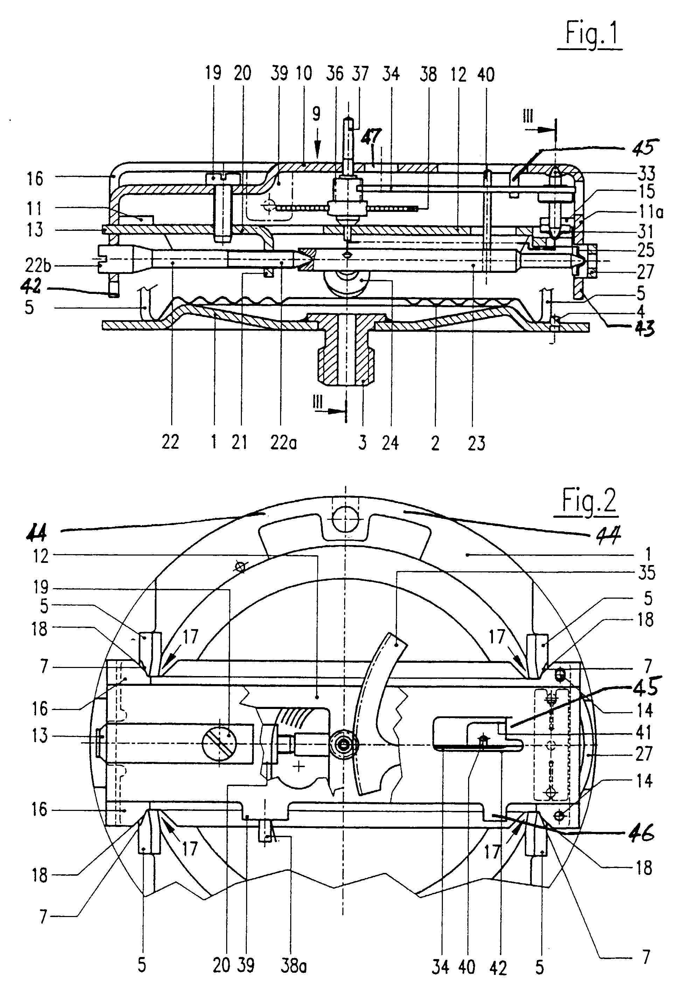

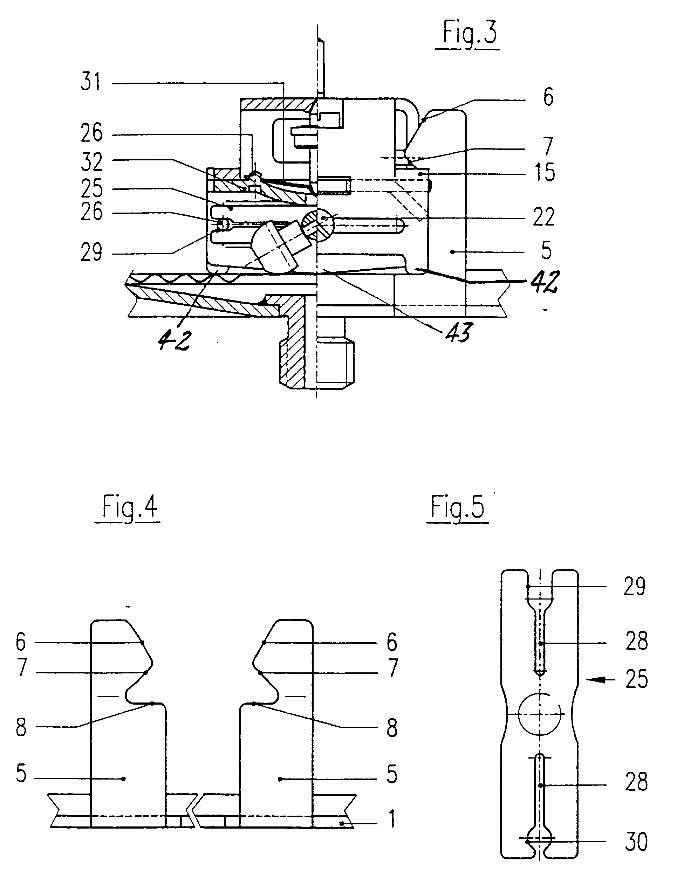

Die Basis 1 weist vier aufwärtsgebogene Zungen 5 auf, die in Figur 1 nur teilweise dargestellt sind. Wie insbesondere die Figuren 3 und 4 zeigen, weisen diese elastischen Zungen 5 am oberen leicht einwärts gebogenen Ende einen Haltezahn mit einer oberen geneigten Flanke 6 und einer unteren geneigten Flanke 7 auf. Unterhalb der Flanke 7 befindet sich eine Schulter 8. Die Zungen 5 dienen der elastischen Halterung von zwei Brücken des Messwerks. Die erste dieser Brücken 9 weist ein oberes im wesentlichen flaches Joch 10 und zwei seitliche rechtwinklig dazu stehende, nach unten ragende Schenkel 11 und 11a auf. Die zweite, untere Brücke 12 ist im wesentlichen flach. Sie greift mit einer Zunge 13 praktisch ohne seitliches Spiel in ein Fenster des Schenkels 11 und ist damit in zusammengebautem Zustand an dieser Seite in eindeutiger Lage gehalten. Am anderen Ende weist die Brücke 12 herausgedrückte Nocken 14 auf, welche in ein Loch bzw. Langloch von einspringenden Lappen 15 des Schenkels 11a eingreifen und damit auch an diesem Ende die gegenseitige Lage der Brücken 9 und 12 im montierten Zustand eindeutig bestimmen. Den Lappen 15 entsprechende Lappen 16 sind auch am anderen Ende der Brücke 9 vorgesehen. An den Seiten der Brücke 12 sind Ausschnitte 17 vorgesehen. Die einen Flanken 18 dieser Ausschnitte decken sich mit entsprechenden Flanken der Lappen 15 und 16. Gegen diese Flanken der Lappen 15 und 16 liegen die Flanken 7 der Zungen 5 im montierten Zustand elastisch an und halten die Brücken in ihrer gegenseitigen Lage zusammen, wobei die vertikale Lage im übrigen eindeutig bestimmt ist durch Auflage der unteren Brücke 12 auf die Schultern 8 der Zungen 5. Die Brücken 9 und 12 sind somit durch ineinandergreifende Orientierungsmittel und durch die elastischen Kräfte der Haltezungen 5 in eindeutiger Lage miteinander und mit der Basis 1 des Gerätes verbunden. In fertig montiertem Zustand sind allerdings die Brücken 9 und 12 ausserdem durch eine einzige Schraube 19 verbunden. Diese Schraube 19 greift an einer freigeschnittenen und somit elastisch verformbaren Zunge 20 der unteren Brücke 12 an. Mit einem nach unten gebogenen Flansch 21 der Zunge 20 ist ein Lagerstift 22 verschraubt, dessen Spitze in eine Ausnehmung einer drehbar gelagerten Achse 23 greift. Das Gewinde 22a des Stiftes 22 ist als selbstformendes Gewinde ausgebildet und hat sich völlig spielfrei selbst in den Flansch 22 ohne Spanbildung geformt. Das erweiterte, mit einem Schraubenschlitz versehene Ende 22b des Stiftes 22 ist in montiertem Zustand zwischen zwei Stegen des Schenkels 11 der Brücke 9, von welchen der eine elastisch verformbar ist, leicht geklemmt und damit gegen ungewollte Verdrehung gesichert.

Mit der Achse 23 ist ein kugelartiger, auf den flachen Mittelteil der Membran 2 aufliegender Taster 24 verbunden, welcher die Bewegung bzw. Position der Membran auf die Achse 23 überträgt. Das andere Ende der Achse 23 greift mit einer Spitze in eine Vertiefung einer Lagerfeder 25, die an herausgedrückten Nocken 26, von welchen in Figur 3 einer dargestellt ist, in bestimmter Position gehalten ist. Die Lagerfeder 25 kann innerhalb eines herausgebogenen Teils 27 des Schenkels 11a mehr oder weniger durchgebogen werden, wobei allerdings der Teil 27 die Durchbiegung der Lagerfeder 25 derart begrenzt, dass die Achse 23 nicht aus ihren Lagern springen kann, wenn starke Schläge auf das Gerät wirken. Die Lagerfeder 25 ist in Figur 5 in grösserem Massstab dargestellt. Sie weist an beiden Enden verhältnismässig tiefe Schlitze 28 auf, derart dass die Federenden als elastisch spreizbare Gabeln ausgebildet sind. Am einen Ende endet der Schlitz 28 in einem erweiterten Schlitzteil 29, so dass die Lagerfeder auf ihrem Haltenocken 26 in Längsrichtung der Feder sich etwas verschieben kann, wenn die Feder mehr oder weniger durchgebogen wird. Am anderen Ende der Lagerfeder weist der Schlitz 28 eine kreisförmige Erweiterung 30 auf, in welche ein Haltenocken 26 spielfrei eingreift und damit die Lagerfeder in eindeutiger Lage sichert. Der Durchmesser der Haltenocken 26 ist etwas grösser gewählt als der Durchmesser der erweiterten Stelle 30 bzw. die Breite der erweiterten Stelle 29, so dass die Lagerfeder 25 bei der Montage auf die Nocken 26 aufgesteckt werden kann und sich dann selbst hält. Eine entsprechende Lagerfeder 31 ist mittels entsprechender Haltenocken 26 über einem heruntergebogenen Steg 32 der unteren Brücke 12 angeordnet. Sie dient der Lagerung der unteren Spitze einer Achse 33, deren obere Spitze in einem eingeprägten Lagerkegel der oberen Brücke 9 gelagert ist. Auch die Lagerung der Achse 33 zwischen einem starren und einem federnden Lager ist so gewählt, dass die Achse weder unter starken Stössen noch bei allfälliger Berührung oder Manipulation des Schwenkarms 34 aus den Lagern springen kann. Auf der Achse 33 sitzt ein Schwenkarm 34 mit einem Zahnsegment 35, welches in ein Ritzel 36 einer Zeigerachse 37 greift. Der Zeiger und das zugehörige Zifferblatt sind nicht dargestellt. Auf die Zeigerachse, welche in den Brücken 9 und 12 gelagert ist, wirkt eine Spiralfeder 38, deren äusseres Ende mittels eines Stiftes 38a an einem heruntergebogenen Lappen 39 der Brücke 9 verankert ist. Auf den Schwenkarm 34 wirkt ein in die Achse 23 eingesetzter Stift 40, welcher durch ein Fenster 41 der unteren Brücke 12 durchgreift. Darüber weist die obere Brücke 9 ein grösseres Fenster 42 auf, durch welches der Schwenkarm 34 zu einem später erläuterten Zweck sichtbar ist. Die Spiralfeder 38 übt auf die Zeigerachse ein Drehmoment im Gegenuhrzeigersinn aus, so dass auf das Zahnsegment 35 und den Schwenkarm 34 ein Drehmoment im Uhrzeigersinn wirkt. Damit drückt der Schwenkarm 35 auf den Stift 40, welcher über die Achse 23 den Fühler 24 gegen die Membran 2 anlegt. Die Uebertragungsorgane des Mechanismus des Messgerätes greifen daher spielfrei ineinander, so dass die Bewegung bzw. Position der Membran präzis auf die Zeigerachse bzw. den Zeiger übertragen wird.

Aus Figur 1 und 3 ist ersichtlich, dass das untere Ende des Schenkels 11 mit zwei seitlichen Punktauflagen 42 und das untere Ende des Schenkels 11a mit einer Punktauflage 43 in der Mitte ausgeführt ist. Die drei Auflagestellen liegen genau in der Ebene des ebenen Mittelteils der Membran 2. Es ist damit möglich, das vormontierte Gestell vor dem Einbau in die Haltezungen 5 in definierter Dreipunktauflage auf eine ebene Prüfauflage zu stellen und einen Vorabgleich im Sinne des noch zu beschreibenden Abgleichs vorzunehmen.

Figur 1 zeigt, dass in der Basis Fenster ausgestanzt sind, von welchen eines dargestellt ist und welche elastische Stege 44 und dazwischen eine erweiterte Stelle mit einem Montageloch oder offenen Langloch bildet. An der diametral gegenüberliegenden Stelle oder an mehreren Stellen sind entsprechende Stege vorgesehen. Damit kann die Basis 1 und damit der ganze Mechanismus elastisch aufgehängt und damit gegen Verspannungen bei der Montage in ein Gehäuse geschützt werden.

Die Schwenkbewegung des Schwenkarms 34 bzw. der Verzahnung 35 kann durch Anschläge begrenzt werden, damit die Verzahnung unter keinen Umständen ausser Eingriff mit dem Ritzel 36 gelangen kann. Solche Anschläge 45 und 46 sind in den Figuren 1 und 2 angedeutet.

Ein Loch 47 in der oberen Brücke dient der Inspektion der darunterliegenden Teile, insbesondere der Verzahnung 35.

Zur Montage des dargestellten Gerätes werden die Lagerfedern 25 und 31 wie erwähnt in die Brücken 9 bzw. 12 eingesetzt und halten sich dort selbst. Dann werden die Zeigerachse 37 und die Achse 33 des Schwenkarms 34 bzw. Zahnsegments 35 eingesetzt und die beiden Brücken 9 und 12 zusammengefügt. Schon jetzt kann die Schraube 19 eingesetzt und leicht angezogen werden, um die beiden Brücken definitiv zusammenzuhalten. Jetzt wird die Achse 23 eingesetzt. Hierzu wird die Achse 23 mit ihrer Spitze in die Lagerfeder 25 eingesetzt und dann wird der Stift 22 in den Flansch 21 eingeschraubt, wobei er sein Gewinde selbst formt und daher spielfrei gehalten ist. Durch die Reibung im Gewinde und zusätzlich die erwähnte Reibung am erweiterten Ende 22b ist der Stift 22 gegen ungewollte Verdrehung und damit axiale Verstellung gesichert. Dann werden die Brücken 9 und 12 in die Haltezungen 5 eingeschnappt. Dabei werden die Haltezungen beim Eindrücken der Brücken längs der Flanken 6 gespreizt, worauf die Brücken in die beschriebene Lage einschnappen und zwischen den Flanken 7 und den Schultern 8 in der dargestellten Lage gehalten werden.

Die Lagerung der beiden Achsen 23 und 33 zwischen je einem starren Lagerteil und einer elastischen Lagerfeder 25 bzw. 31 gestattet eine spielfreie Lagerung mit definiertem, durch die Lagerfeder bestimmtem Lagerdruck, was eine sichere aber reibungsarme Lagerung ermöglicht. Es ist bei dieser Lagerung auch kein Verklemmen der Achse 23 möglich. Die elastische Lagerung der Achse 23 hat jedoch eine zusätzliche Bedeutung. Durch Verdrehen des Stiftes 22 kann diese Achse axial verschoben werden. Damit wird in einem bestimmten Bereich auch der Stift 40 axial verschoben, womit sein Angriffspunkt am Schwenkarm 34 und damit das Uebertragungsverhältnis auf die Zeigerachse, bzw. den nicht dargestellten Zeiger, verändert wird. Es ist damit möglich, die Einstellung dieses Uebertragungsverhältnisses auf einfache, sichere Weise und mittels Justierautomaten vorzunehmen, im Gegensatz zur herkömmlichen Praxis, wo der Stift 40 in die richtige Lage gebogen werden musste. Die Schraube 19, die auf die Zunge 20 der Brücke 12 wirkt, kann dazu dienen, diese Zunge und damit das in die Achse 23 eingreifende Ende des Stiftes 22 vertikal einzustellen. Es ist damit eine Nullpunkt-Korrektur in dem Sinne möglich, dass die Auflagestelle des Tasters 24 auf die Membran 2 genau bestimmt werden kann. Diese Einstellung kann mit Hilfe des Schwenkarms 34 und des Fensters 42 kontrolliert werden, d. h. bei richtiger Einstellung soll der Schwenkarm 34 genau parallel zur unteren Fensterkante liegen. Die Nullstellung des Zeigers wird durch Korrektur der Zeigerposition auf seiner Achse oder durch Positionieren des Zifferblattes erzielt.

Es wurde schon darauf hingewiesen, dass das dargestellte Gerät aus besonders einfachen, in der Herstellung günstigen und verhältnismässig wenigen Teilen aufgebaut ist. Dies gilt im besonderer Weise auch für die einteiligen Lagerfedern 25 und 31, die ohne besondere Lagerkörper, beispielsweise Lagersteine, ausgeführt sein können. Die erwähnte spielfreie und reibungsarme Lagerung bewirkt im übrigen eine Verbesserung der Eindeutigkeit der Linearität und eine Herabsetzung der Hysterese.

Das dargestellte Gerät wird nach erfolgter Montage in ein Gehäuse eingesetzt und durch einen Zeiger und ein Zifferblatt ergänzt. Es könnte allerdings auch sein, dass die zusammengefügten Brücken 9 und 12 mit den eingesetzten Teilen des Uebertragungsmechanismus direkt in ein Gehäuse eingeschnappt werden, welches mit geeigneten elastischen Halteorganen versehen ist. Anstelle von Stanz-Biege-Teilen könnten auch mindestens teilweise geometrisch formstabile, z. B. glasfaserverstärkte Kunststoffteile oder Druckgussteile verwendet werden. Anstelle des kugelartigen Tasters 24 könnte ein gekrümmter Finger vorgesehen sein.

## Patentansprüche

1. Messgerät mit einem in einem Gerätegestell gelagerten Mechanismus zur Uebertragung einer Position eines Messorgans (2) an ein Anzeigeorgan, wobei das Gestell aus Formteilen (9, 12) besteht, die mindestens teilweise durch elastische Kräfte verbunden sind, dadurch gekennzeichnet, dass elastische Halterungen (5) an einer Basis (1) oder einem Gehäuse des Messgerätes ausgebildet sind und durch elastischen Druck die Formteile (9, 12) zusammenhalten und zugleich die Formteile (9, 12) mit der Basis (1) oder dem Gehäuse verbinden.

2. Gerät nach Anspruch 1, dadurch gekennzeichnet, dass zwei Gestellteile (9, 12) vorhanden sind, von welchen der erste (9) U-förmig gestaltet ist und der zweite zwischen den Schenkeln (11, 11a) des anderen liegt, wobei ein Teil (23) des Mechanismus zwischen den frei vorstehenden Schenkeln (11, 11a) des ersten Gestellteils (9) montiert ist.

3. Gerät nach Anspruch 2, dadurch gekennzeichnet, dass die zwei Gestellteile (9, 12) zwischen eine geneigte Flanke (7) und eine Schulter (8) der Halterungen (5) durch elastische Kraft gehalten sind und durch ineinandergreifende Orientierungselemente (11, 13, 14) gegenseitig orientiert sind.

4. Gerät nach einem der Ansprüche 1 - 3, dadurch gekennzeichnet, dass die Basis (1) elastische Stege (44) aufweist, welche Montagestellen der Basis mit dem übrigen Teil derselben verbinden und Verspannungen bei der Montage der Basis verhindern.

5. Gerät nach einem der Ansprüche 1 - 4, dadurch gekennzeichnet, dass mindestens ein Element (23) des Mechanismus in mindestens einem elastisch verformbaren Teil (25) gelagert ist, womit eine spielfreie Lagerung mit definierter Reibung und/oder eine Nachstellbarkeit des Elementes (23) zwecks Abgleich erzielbar ist.

6. Gerät nach einem der Ansprüche 1 oder 5, dadurch gekennzeichnet, dass das Messorgan als Membran (2) einer Druckdose ausgebildet ist, und die Basis (1) des Messgerätes als einer die Membran tragender Boden der Druckdose derart mit Durchzug verformt ist, dass er im Zentrum einen grösseren Abstand von der Membran aufweist als am Rand.

7. Gerät nach Anspruch 6, dadurch gekennzeichnet, dass der Boden (1) einteilig mit federnden Halterungen (5) für das den Mechanismus aufnehmende Gestell (9, 12) ausgeführt ist.

8. Gerät nach Anspruch 5, dadurch gekennzeichnet, dass das Element eine drehbare Uebertragungsachse (23) ist, deren Drehbewegung über einen radialen Stift (40) übertragen wird, wobei ein Wellenende in einem axial federnden Teil (25) gelagert ist, während das andere Wellenende an einem axial verstellbaren Teil, z. B. einer Schraube (22), gelagert ist, welcher Teil seinerseits in einem radial elastisch verformbaren und einstellbaren Träger (20, 21) sitzt.

9. Gerät nach Anspruch 8, dadurch gekennzeichnet, dass eine auf den Träger (20, 21) wirkende Stellschraube (19) zugleich Gestellteile (9, 12) zusammenhält.

10. Gerät nach einem der Ansprüche 1 bis 9, dadurch gekennzeichnet, dass Lager (25, 31) aus federndem Flachmaterial vorhanden sind die elastisch durch Schlitze (28) gebildete, verformbare Haltegabeln aufweisen, mit welchen sie auf Nocken (26) gehalten sind.

11. Verfahren zur Montage des Gerätes nach Anspruch 1, dadurch gekennzeichnet, dass mindestens ein Teil des Mechanismus durch loses Zusammenfügen von Uebertragungselementen (33 - 36) und Gestellteilen (9, 12) vormontiert und dann durch Einschnappen in Halterungen (5) durch elastische Kräfte zusammengehalten und mit den übrigen Geräteteilen (1) verbunden wird.

12. Verfahren nach Anspruch 11, dadurch gekennzeichnet, dass die Gestellteile (9, 12) mittels einer einzigen Schraube (19) verbunden werden, und dass durch Einstellen dieser Schraube (19) bzw. Verformung eines der Gestellteile entsprechend der Schraubenkraft ein Abgleich vorgenommen wird.

## Claims

1. Measuring instrument comprising a mechanism for the transmission of the position of a measuring member (2) to an indicating member, the measuring device being supported in a chassis, and the chassis being composed of shaped structural parts (9, 12) which are at least partially connected by elastic forces, characterised in that elastic holders (5) are formed on a base (1) or a housing of the measuring instrument which join the shaped parts (9, 12) by elastic pressure and at the same time connect them to the base (1) or the housing.

2. Instrument according to claim 1, characterised in that two frame portions (9, 12) are provided of which the first one (9) has a U-shaped configuration and the second one is disposed between the shanks (11, 11a) of the other one while a part (23) of the mechanism is mounted between the freely protruding shanks of the first frame portion (9).

3. Instrument according to claim 2, characterised in that the two frame portions (9, 12) are held between an inclined flank (7) and a shoulder (8) of the holders (5) by elastic force and positioned by interlocking positioning means (ll, 13, 14).

4. Instrument according to one of claims 1 to 3, characterised in that the base (1) comprises elastic portions (44) which connect mounting points of the base to the rest of the same and allow to prevent tensions in the mounted base.

5. Instrument according to one of claims 1 to 4, characterised in that at least one element (23) of the mechanism is supported in at least one elastically deformable portion (25), which allows to obtain a play-free support with a defined friction and/or a regulating capacity of the element (23) for adjusting purposes.

6. Instrument according to one of claims 1 or 5, characterised in that the measuring member is in the form of a membrane (2) of a pressure pickup, and that the base (1) of the measuring instrument is a bottom of the pressure pickup which carries the membrane and which is deformed in such a manner that its center is at a greater distance from the membrane than its edge.

7. Instrument according to claim 6, characterised in that the bottom (1) is integral with elastic holders (5) for the chassis (9, 12) receiving the mechanism.

8. Instrument according to claim 5, characterised in that the element is a rotatable transmission shaft (23) whose rotation is transmitted by a radial pin (40), one of the shaft ends being journalled in an axially elastic portion (25) while the other shaft end runs on an axially displaceable portion such as a screw, said portion in turn being supported in a supporting member (20, 21) which is elastically deformable and adjustable in the radial direction.

9. Instrument according to claim 8, characterised in that an adjusting screw acting upon the supporting member (20, 21) simultaneously serves to join frame portions (9, 12).

10. Instrument according to one of claims 1 to 9, characterised in that bearings (25, 31) of an elastic flat material are provided which comprise deformable retaining forks formed by slots (28) and by means of which they are held on projections (26).

11. Method for the assembly of the instrument according to claim 1, characterised in that at least a part of the mechanism is pre-assembled by loosely joining transmission elements (33 - 36) and frame portions (9, 12), and in that it is subsequently held together and connected to the remaining instrument parts (1) by a snap-in attachment to holders (5) .

12. Method according to claim 11, characterised in that the frame portions (9, 12) are connected by means of a single screw (19), and in that an adjustment is obtained by adjusting this screw (19) resp. by the deformation of one of the frame parts according to the force of the screw.

## Revendications

1. Instrument de mesure, comportant un mécanisme pour la transmission d'une position d'un organe de mesure (2) à un organe indicateur qui est logé dans un châssis de l'instrument, ledit châssis étant constitué de pièces profilées (9, 12) qui sont au moins partiellement reliées par des forces élastiques, caractérisé en ce qu'une base (1) ou un boîtier de l'instrument de mesure comporte des retenues élastiques (5) qui rattachent par pression élastique lesdites pièces profilées (9, 12) et les relient au même temps à ladite base (1) ou au boîtier.

2. Instrument selon la revendication 1, caractérisé en ce qu'il présente un châssis en deux parties (9, 12) dont la première (9) est en forme de U et la deuxième est comprise entre les montants (11, 11a) de l'autre alors qu'une partie (23) dudit mécanisme est montée entre les montants (11, 11a) libres de la première partie (9) du châssis.

3. Instrument selon la revendication 2, caractérisé en ce que les deux parties (9, 12) du châssis sont retenues entre un flanc incliné (7) et un épaulement (8) desdites retenues (5) par la force élastique et mutuellement orientées par des éléments d'orientation (11, 13, 14) emboîtés.

4. Instrument selon l'une des revendications 1 à 3, caractérisé en ce que la base (1) comporte des barrettes (44) élastiques qui relient des points de montage de la base au reste de celle-ci et qui permettent d'éviter des tensions lors du montage de la base.

5. Instrument selon l'une des revendications 1 à 4, caractérisé en ce qu'un élément (23) au moins du mécanisme est logé dans au moins une partie (25) pouvant être déformée de manière élastique, ce qui permet d'obtenir un logement sans jeu et à basse friction et/ou une capacité de réglage dudit élément (23) aux fins d'un ajustage.

6. Instrument selon l'une des revendications 1 ou 5, caractérisé en ce que l'organe de mesure présente la forme d'une boîte dynamométrique, et que la base (1) de l'instrument de mesure présente la forme d'un fond de ladite boîte dynamométrique qui porte la membrane et qui est déformé de telle manière que sa distance de la membrane est plus grande au centre qu'au bord.

7. Instrument selon la revendication 6, caractérisé en ce que le fond (1) venu d'une pièce avec des retenues élastiques (5) pour le châssis recevant le mécanisme.

8. Instrument selon la revendication 5, caractérisé en ce que ledit élément est un axe de transmission (23) rotatif dont le mouvement de rotation est transmis par une cheville radiale (40), l'une des extrémités de l'arbre étant logée dans une partie (25) élastique en direction axiale alors que l'autre extrémité de l'arbre est logée dans une partie déplaçable en direction axiale telle qu'une vis (22), laquelle partie est à son tour logée dans un support (20, 21) élastiquement et réglable en direction radiale.

9. Instrument selon la revendication 8, caractérisé en ce qu'une vis de réglage (19) agissant sur ledit support (20, 21) relie au même temps des éléments du châssis.

10. Instrument selon l'une des revendications 1 à 9, caractérisé en ce qu'il comporte des paliers (25, 31) sous forme de ressorts plats qui présentent des fourches élastiques, formées par des fentes (28), qui les fixent sur des ergots (26) .

11. Procédé pour le montage de l'instrument selon la revendication 1, caractérisé en ce qu'une partie au moins du mécanisme est préalablement montée par l'assemblage provisoire d'éléments de transmission (33 - 36) et d'éléments du châssis (9, 12) qui sont ensuite rattachés et reliés aux autres parties de l'instrument (1) en encliquetant ladite partie dans des retenues élastiques (5).

12. Procédé selon la revendication 11, caractérisé en ce que les éléments du châssis (9, 12) sont reliés au moyen d'une vis unique (19), et qu'un ajustement est effectué par le réglage de cette vis (19) resp. par la déformation d'un des éléments du châssis selon la force de la vis.
